(19) Europäisches Patentamt
European Patent Office
Office européen des brevets

(11) **EP 2 283 630 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(21) Anmeldenummer: **09726293.5**

(22) Anmeldetag: **11.02.2009**

(51) Int Cl.:
**H04L 29/06** *(2006.01)*

(86) Internationale Anmeldenummer:
**PCT/EP2009/000928**

(87) Internationale Veröffentlichungsnummer:
**WO 2009/118078 (01.10.2009 Gazette 2009/40)**

(54) **KOMPATIBILITÄTSVERFAHREN UND SYSTEM FÜR DEN AUSTAUSCH VON DATEN**

COMPATIBILITY METHOD AND SYSTEM FOR DATA EXCHANGE

PROCEDE ET SYSTEME DE COMPATIBILITES POUR L'ECHANGE DES DONNES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.03.2008 DE 102008016302**

(43) Veröffentlichungstag der Anmeldung:
**16.02.2011 Patentblatt 2011/07**

(73) Patentinhaber: **SEW-Eurodrive GmbH & Co 76646 Bruchsal (DE)**

(72) Erfinder: **ERWIN, Peter 75045 Walzbachtal (DE)**

(56) Entgegenhaltungen:
**EP-A2- 0 279 232     EP-A2- 0 498 130
WO-A2-98/35526     US-A1- 2006 028 994**

**Beschreibung**

Die Erfindung betrifft ein Verfahren zum Betreiben eines Systems und ein System.

Es ist bekannt, Busteilnehmer mittels einer Schnittstelle, wie beispielsweise ein Datenbus, zum Datenaustausch betreibbar zu verbinden. Dies gilt insbesondere für Feldgeräte, wie Umrichter, dezentrale oder zentrale Steuerungen und dergleichen. Meist weisen die Teilnehmer eine individuelle Adresse auf und tauschen die Daten in einem jeweils vorgeschriebenen Busprotokoll aus.

Es ist auch bekannt, Softwaremodule, wie Plugins über eine Schnittstelle zum Datenaustausch zu verbinden. Auch hierbei werden die Daten gemäß einem vorgeschriebenen Protokoll ausgetauscht.

Bei komplexen Systemen, wie umfangreichen Softwaremodulen oder Busteilnehmern, werden meist viele Entwicklungsstadien durchlaufen. Somit ist das Überprüfen der Kompatibilität der verschiedenen Protokoll-Versionen aufwändig.

Der Erfindung liegt daher die Aufgabe zugrunde, bei komplexen Systemen die Inbetriebnahme zu vereinfachen.

Erfindungsgemäß wird die Aufgabe bei dem Verfahren nach den in Anspruch 1 und bei dem System nach den in Anspruch gangegebenen Merkmalen gelöst.

Wichtige Merkmale der Erfindung bei dem Verfahren sind, dass es zum Betreiben eines Systems, umfassend Teilnehmer, die über eine Schnittstelle Daten austauschen, wobei

jeder Teilnehmer eine Protokoll-Versions-Information oder eine Liste aller seiner, insbesondere seinen vorangegangenen Entwicklungsstadien zugeordneten, vorangegangenen Protokoll-Versions-Informationen speichert,

wobei während der Initialisierungsphase die oder eine, insbesondere neueste, Protokoll-Versions-Information ausgetauscht und verglichen wird.

Von Vorteil ist dabei, dass auch bei Teilnehmern, die verschiedene Versionen in ihrer Entwicklungshistorie durchlaufen haben, ein Vergleich der Versionen auf Kompatibilität der Protokolle ermöglicht ist. Außerdem ist die Inbetriebnahme bei komplexen Systemen vereinfacht und sicherer. Darüber hinaus erkennen die Teilnehmer selbsttätig, also automatisch, wenn sich die Schnittstelle geändert hat und ein Update erforderlich ist.

Bei einer vorteilhaften Ausgestaltung umfasst die Protokoll-Versions-Information, also CIPV, zumindest

- eine Information über die aktuelle Version, also CurrVer,
- eine Information über die Kompatibilitätsversion, also CompVer, und
- eine Information über den Matchcode.

Von Vorteil ist dabei, dass als Matchcode eine eindeutig der jeweiligen Version zuordenbare Information vorsehbar ist, beispielsweise das Erstellungsdatum der Version. Andererseits ist auch eine Summe solcher vorangegangener Matchcodes, wie Erstellinformationen verwendbar. Insgesamt wird also in der Initialisierungsphase eine Information ausgetauscht, mit der Kompatibilität feststellbar ist oder eine ältere vorangegangene kompatible Protokollversion auffindbar ist.

Bei einer vorteilhaften Ausgestaltung ist der Matchcode der aktuellen Version CurrVer seiner zugehörigen Protokoll-Versions-Information eindeutig zugeordnet. Von Vorteil ist dabei, dass eine eindeutige Identifizierung ausführbar ist, beispielsweise ein Erstelldatum oder dergleichen.

Bei einer vorteilhaften Ausgestaltung wird als Ergebnis des Vergleichs die volle Kompatibilität, die volle Inkompatibilität, Unplausibilität oder die Kompatibilität mit der jeweils neuesten oder einer älteren Version festgestellt, insbesondere wobei das weitere Verhalten des anderen Teilnehmers beobachtet und mit ausgewertet wird. Von Vorteil ist dabei, dass eine erhöhte Sicherheit gewährleistbar ist beim Datenaustausch. Außerdem ist es auch ermöglicht, entsprechend einer älteren Protokollversion Daten auszutauschen.

Bei einer vorteilhaften Ausgestaltung ist der Matchcode der ausgetauschten CIPV als Summe aller Matchcodes der in der Liste des jeweiligen Teilnehmers vorangegangenen CIPV gebildet, insbesondere modulo einer Basis. Von Vorteil ist dabei, dass eine Entwicklungshistorie nachvollziehbar ist.

Bei einer vorteilhaften Ausgestaltung wird sukzessive, insbesondere von der neuesten zur ältesten CIPV, mit den Listeneintragungen verglichen, insbesondere bis zumindest teilweise Kompatibilität festgestellt wird. Von Vorteil ist dabei, dass mit einer kompatiblen Version, insbesondere einer möglichst aktuellen aus der Entwicklungshistorie, ein Datenaustausch durchführbar ist.

Bei einer vorteilhaften Ausgestaltung summiert ein Teilnehmer so viele Matchcodes seiner Historie solange auf, bis der jeweils gebildete Summenwert dem Matchcode der aktuellen Version der ausgetauschten CIPV, also der vom anderen Teilnehmer empfangenen, gleicht und somit eine vergleichbare CIPV festgestellt ist, wobei die Aufsummation bei seiner ältesten CIPV begonnen wird und der zeitlichen Rangfolge folgt, insbesondere wobei der nachfolgende Datenaustausch gemäß der aktuellen Version der ausgetauschten CIPV des zu dieser CIPV zugehörigen Teilnehmers erfolgt. Von Vorteil ist dabei, dass die aktuellste kompatible Protokollversion aus der Entwicklungshistorie feststellbar ist.

Bei einer vorteilhaften Ausgestaltung beobachtet bei Nichtauffinden einer vergleichbaren CIPV der Teilnehmer das Kommunikationsverhalten des anderen Teilnehmers während des auf die Initialisierungsphase folgenden Datenaustausches und nimmt dementsprechend Kompatibilität an oder verneint gegebenenfalls. Von Vorteil ist dabei, dass auch bei Nichtfinden einer vergleichbaren CIPV allein durch das Beobachten des Verhaltens des anderen Teilnehmers ein Datenaustausch freigebbar ist.

Bei einer vorteilhaften Ausgestaltung werden abhängig vom Ergebnis des Vergleichens Fehlermeldungen, Warnmeldungen oder dergleichen abgegeben oder es wird der Datenaustausch fortgeführt. Von Vorteil ist dabei, dass der Bediener oder ein mittels Datenaustauschverbindung verbundener Teilnehmer informiert wird und zugehörige Maßnahmen einleiten kann. Beispielsweise kann die Meldung auch das Erfordernis zum Inhalt haben, dass ein Update erforderlich ist.

Wichtige Merkmale bei dem System sind, dass es Teilnehmer umfasst, die über eine Schnittstelle zum Datenaustausch geeignet betreibbar sind,

wobei jeder Teilnehmer einen Speicher zum Abspeichern einer Protokoll-Versions-Information aufweist,

wobei während der Initialisierungsphase die Protokoll-Versions-Information austauschbar ist,

wobei jeder Teilnehmer Vergleichsmittel für das Vergleichen der Protokoll-Versions-Information, welche im zugehörigen Speicher abgelegt ist, und der empfangenen Protokoll-Versions-Information umfasst.

Von Vorteil ist dabei, dass der Speicherbedarf gering ist, da nur eine CIPV oder eine Liste von CIPV abzuspeichern ist, und trotzdem eine hohe Sicherheit gewährleistbar ist. Außerdem ist die Inbetriebnahme vereinfacht. Der Aufwand bei Erstellen einer neuen Version beim Entwicklungsvorgang des Teilnehmers ist gering, da zu jeder neuen Version nur eine zugehörige CIPV zusätzlich abzuspeichern ist.

Weitere Vorteile ergeben sich aus den Unteransprüchen.

**Bezugszeichenliste**

T1     Teilnehmer

T2     Teilnehmer

Die Erfindung wird nun näher erläutert:

Die Erfindung bezieht sich auf mindestens zwei Objekte, zwischen denen über eine Schnittstelle ein Datenaustausch ausführbar ist.

Objekte sind hierbei in einem ersten erfindungsgemäßen Ausführungsbeispiel Vorrichtungen, wie Automatisierungsgeräte, Umrichter, Steuerungen oder andere Geräte der Anlagentechnik. Allgemein gesprochen sind also Busteilnehmer als Objekte vorsehbar, die über eine Datenbusverbindung im Datenaustausch stehen.

In einem zweiten erfindungsgemäßen Ausführungsbeispiel sind die Objekte als Softwaremodule ausgeführt, beispielsweise als PlugIns, Viewer oder entsprechende Softwareprodukte, die zum Datenaustausch befähigt sind.

Bei beiden Varianten von Objekten ist nicht immer gewährleistet, dass zwei Objekte sich richtig verständigen, wenn sie untereinander Daten austauschen. Insbesondere nachdem mindestens eines der Objekte aktualisiert wurde, muss manuell festgestellt werden, ob eine korrekte Verständigung möglich ist und ob die nachfolgend ausgetauschten Daten zueinander passen. Bei Objekten, die Vorrichtungen sind kann die Aktualisierung den Austausch des physischen Geräts oder eines seiner Teilkomponenten betreffen oder ein Software-Update der Software des Geräts.

Bei der Erfindung tauschen beide Objekte vorzugsweise innerhalb ihrer Initialisierungsphase die sogenannte Protokoll-Versions-Information, im Folgenden auch als CIPV bezeichnet, untereinander aus, dann stellen die Objekte dadurch selbstständig fest, inwieweit sie kompatibel zueinander sind. Im Fall der Kompatibilität kann der Datenaustausch fortgesetzt werden, andernfalls verhalten sie sich sicher im Sinne des Systems, in dem sie sich befinden.

Insbesondere sind als Objekte Teilnehmer eines Bussystems vorsehbar mit

- einer Punkt-zu-Punkt-Schnittstelle zwischen zwei Teilnehmern (beispielsweise zwei Geräte, die über eine beliebige, beispielsweise serielle, Schnittstelle kommunizieren oder

- einer Schnittstelle zwischen zwei Komponenten einer Software (beispielsweise Softwaremodule, wie Plug-Ins oder DLLs) oder

- einer Busschnittstelle mit mehreren Teilnehmern.

Die Objekte werden daher auch als "Teilnehmer" bezeichnet.

Die CIPV besteht grundsätzlich aus drei Elementen, die hier mit

- CurrVer, also aktuelle Version,

- CompVer, also Kompatibilitätsversion und

- Matchcode bezeichnet werden.

Die Elemente der CIPV sind als Ganzzahlen, Fließkommazahlen, Zeichen, Zeichenketten oder beliebige Kombinationen hieraus wählbar. Wichtig bei der Wahl des Datentyps der Elemente ist nur, dass sich zwei Elemente des Namens CurrVer oder zwei Elemente des Namens CompVer oder ein Element des Namens CurrVer mit einem Element des Namens CompVer so vergleichen lassen, dass bestimmt werden kann ob und welches der beiden Elemente den größeren bzw. den kleineren Wert hat als das andere.

Die Positionswahl der Elemente, also die Element-Nummer, ist ebenfalls frei. Wichtig bei der Positionswahl ist nur, dass in dem Gesamtsystem, in dem CIPVs untereinander ausgetauscht werden, die Positionen so gewählt sind, dass der oben genannte Vergleich durchführbar ist.

Im weiteren Verlauf dieser Funktionsbeschreibung werden Beispiele gezeigt, in denen die Elemente der CIPV jeweils aus einem 16-Bit-Wort bestehen, und die Elemente in der Reihenfolge CurrVer, CompVer, Matchcode auftreten.

In Tabelle 1 ist für ein erfindungsgemäßes Ausführungsbeispiel das Format einer Basis-CIPV gezeigt, welche die Grundstruktur der CIPV hat.

Ein konkretes Beispiel ist: {*1002, 1000, 12077*} steht für Version V1.002 vom 12.07.2007, kompatibel bis V1.000, also eine ältere Version.

Im Folgenden wird nun der Austausch der CIPV, beispielsweise während der Initialisierungsphase, und der nachfolgende Vergleich beschrieben: Jeder der Teilnehmer hält am Portal seiner Schnittstelle eine CIPV bereit. In der Initialisierungsphase bzw. der ersten Kontaktaufnahme tauschen sie zumindest auch die CIPV untereinander aus.

Im einfachsten Fall genügt der Vergleich der untereinander ausgetauschten CIPVs, die als Basis-CIPVs ausgeführt sind. Es kann für folgende Fälle beispielsweise adäquat folgendermaßen reagiert werden:

1. Alle drei CIPV-Elemente stimmen überein: Die Teilnehmer sind zueinander kompatibel, es besteht kein Handlungsbedarf, der Datenaustausch kann stattfinden.

2. Die aktuelle Version des Teilnehmers T1 ist höher als die des Teilnehmers T2 und die Kompatibilitätsversion des Teilnehmers T1 ist kleiner oder gleich der aktuellen Version des Teilnehmers T2:

Hierzu sei als konkretes Beispiel genannt:

CIPV T1 = {*1002, 1000, 12077*}, CIPV T2 = {*1000, 1000, 25037*},

Folgerung: Der Teilnehmer T1 enthält zusätzliche Eigenschaften, die durch den Teilnehmer T2 nicht bedient werden können. Der Teilnehmer T1 ist abwärtskompatibel.

Verhalten des Teilnehmers T1: T1 kann das berücksichtigen z. B. durch Nichtbenutzung der zusätzlichen Eigenschaften gegenüber der Gegenstelle T2. Gleichzeitig kann er dem Benutzer melden, dass T2 die zusätzlichen Eigenschaften nicht unterstützt.

Verhalten des Teilnehmers T2: T2 kann das berücksichtigen z. B. durch Erzeugen einer Fehlermeldung an T1, sollte T1 die zusätzlichen Eigenschaften benutzen. Gleichzeitig kann T2 dem Benutzer melden, dass die Gegenstelle T1 scheinbar zusätzliche Eigenschaften hat, die T2 nicht unterstützt.

Verhalten des Benutzers: Er kann eine Aktualisierung des Teilnehmers T2 durchführen, andernfalls muss er mit Einschränkungen des Funktionalitätsumfangs von T1 rechnen.

3. Die aktuelle Version des Teilnehmers T1 ist höher als die des Teilnehmers T2 und die Kompatibilitätsversion des Teilnehmers T1 ist höher als die aktuelle Version des Teilnehmers T2:

Hierzu sei als konkrete Beispiel genannt:

CIPV T1 = {*1010, 1003, 47018*}, CIPV T2 = {*1000, 1000, 25037*},
Neben zusätzlichen Eigenschaften von T1 herrscht eine Inkompatibilität bereits vorhandener Eigenschaften, die bei Benutzung wahrscheinlich zu Fehlfunktionen führen werden:

Verhalten des Teilnehmers T1: T1 reagiert darauf z. B. durch das Einstellen der Kommunikation zu T2. Gleichzeitig meldet T1 dem Benutzer, dass er zur Gegenstelle T2 nicht mehr kompatibel ist.

Verhalten des Teilnehmers T2: T2 berücksichtigt das, indem er z. B. so reagiert wie T1.

Verhalten des Benutzers: Er wird aufgefordert eine Aktualisierung des Teilnehmers T2 durchzuführen. Bis dahin werden der Kommunikationsbetrieb zwischen beiden Teilnehmern und die daran gekoppelten Funktionen eingestellt.

4. Unplausible Fälle wie z. B.

a) bei mindestens einem der Teilnehmer ist die Kompatibilitätsversion größer als die eigene aktuelle Version oder

b) die aktuelle Version sowie die Kompatibilitätsversion beider Teilnehmer stimmt überein, der Matchcode jedoch nicht

führen zum sofortigen Einstellen des Kommunikationsbetriebs zwischen beiden Teilnehmern und die daran gekoppelten Funktionen sowie einer Aufforderung an den Benutzer den fehlerhaften Teilnehmer zu aktualisieren.

In der Tabelle 2 ist hierzu, also zum einfachen CIPV-Vergleich eine tabellarische Zusammenfassung gezeigt.

Im Folgenden wird die Sicherheit im Sinne der Kompatibilitätsgarantie beschrieben:

Von den oben genannten unplausiblen Fällen sei ein wahrscheinlicher herausgegriffen:

Die aktuelle Version sowie die Kompatibilitätsversion beider Teilnehmer stimmt überein, der Matchcode jedoch nicht.

Geschildert wird hier ein noch relativ einfacher Fall: Ein solcher Fall kann zustande kommen, wenn sich die Versionen auseinander entwickeln. Man stelle sich hierzu vor, dass zwei am Bus teilnehmende Objekte von unterschiedlichen Instanzen bearbeitet werden. Ursprünglich hatten sie die gleiche Version. Der Teilnehmer T1 wurde weiter entwickelt, insbesondere inklusive der Inkrementierung der Version und Änderung des Matchcodes. In ähnlichem Zeitraum wurde Teilnehmer T2 ebenfalls weiter entwickelt, insbesondere inklusive der Inkrementierung der Version und des Matchcodes. Die Entwicklung beider Teilnehmer ging jedoch ohne Absprache untereinander vonstatten. Das Zielsystem wurde bis dato mit keinem der beiden Weiterentwicklungen aktualisiert.

Kommt es nun zu einer Aktualisierung beider Teilnehmer auf dem Zielsystem mit den jeweiligen Weiterentwicklungen, dann tritt der oben genannte Fall unter Punkt 4 ein. Der Matchcode legt für diesen Fall den Konflikt offen und der Anwender, also Benutzer, wird aufmerksam.

Dies ist ein Beispiel für zwei Teilnehmer auf einem Zielsystem und insofern relativ überschaubar.

Betrachtet werden soll ein komplexeres Systeme mit folgenden Eigenschaften:

- Viele Teilnehmer, beispielsweise bis 10 oder bis über 1000, die nicht nur einfache Punkt-zu-Punkt-Schnittstellen haben, sondern in denen einige Teilnehmer viele Schnittstellen zu mehreren anderen Teilnehmern haben, oder Bussysteme mit mehreren Teilnehmern.

- Das System enthält unterschiedliche Teilnehmerarten: z. B. einige Softwarekomponenten auf einem PC gekoppelt über unterschiedliche Schnittstellen untereinander und über DFÜ-Schnittstellen an Geräte, die ihrerseits einige Softwarekomponenten enthalten.

- Die Teilnehmer werden nicht nur von einer oder zwei, sondern von vielen Instanzen, beispielsweise bis 10 oder mehr, bearbeitet und weiter entwickelt.

- Die Entwicklung der Teilnehmer durch die Instanzen erstreckt sich über einen längeren Zeitraum, beispielsweise mehrere Jahre, auch im Rahmen der Weiterentwicklung des Produkts in dessen Lebenszyklus.

- Einige der Teilnehmer sind universelle Module, die auch über die Produktgrenzen hinaus verwendet werden.

Dieses System ist in vielerlei Hinsicht nicht mehr überschaubar, aber eher häufig als selten anzutreffen und sicher häufiger als das oben geschilderte einfache Ausführungsbeispiel.

In dem genannten komplexen Fall ist es denkbar, dass viele Teilnehmer innerhalb deren Produktlebenszyklus weiter entwickelt werden, ohne dass eine explizite Absprache zu den Entwicklungsinstanzen der anderen Teilnehmer stattfindet.

So ist es sogar wahrscheinlich, dass mehrere Entwicklungsschritte mit entsprechend mehrfacher Änderung der Versionen und des Matchcodes stattgefunden haben werden bevor ein Zielsystem mit dem weiter entwickelte Teilnehmer aktualisiert wird. Der Aufwand zur Überwachung aller potentiell angeschlossenen Teilnehmer an die geänderte Schnittstelle des weiter entwickelten Teilnehmers ist unverhältnismäßig hoch und somit für die Praxis untauglich. Besonders bei einem universellen Teilnehmer ist es so gut wie nicht möglich festzustellen, welche Teilnehmer an dessen Schnittstelle oder Schnittstellen angeschlossen werden.

Im Zuge dessen ist es denkbar, dass nach dem Überspringen erst mehrerer Entwicklungsschritte zwei Teilnehmer durch eine Aktualisierung im Zielssystem wieder zusammenfinden, möglicherweise sogar unter der gleichen Versionsangabe. Da der Matchcode höchstwahrscheinlich nicht mehr passt, ist es sehr wahrscheinlich, dass zur Aufrechterhaltung des Betriebs nur der letzte Entwicklungsschritt angepasst wird, nicht jedoch die Zwischenschritte: Somit ist der Entwicklungsprozess beider Teilnehmer nicht abgeglichen und eine Kompatibilitätsgarantie ist nicht gegeben.

Um zu gewährleisten, dass die Teilnehmer wirklich kompatibel zueinander sind, ist bei einem Abgleich erforderlich, dass auch der vergangene Entwicklungsprozess in all seinen Schritten berücksichtigt wird. Dies kann nur geschehen, indem die Spezifikationen sämtlicher Zwischenschritte begutachtet und ggf. a postum implementiert werden. Auch das soll durch die CIPV, insbesondere den Matchcode, signiert werden.

Da in der Basis-CIPV nur der Matchcode zur aktuellen Version passt und bei einfacher Sicherheit nur auf diese Weise unter den Teilnehmern ausgetauscht und auf Kompatibilität geprüft wird, kann der Entwicklungsprozess nicht berücksichtigt werden.

Eine Methode wäre zwar, dass alle CIPVs (also auch jene, die während des Entwicklungsprozesses entstanden sind) untereinander ausgetauscht werden.

Es leuchtet aber ein, dass diese Methode unter Umständen einen unvertretbar hohen Kommunikationsaufwand bedeutet, der entsprechend schlecht verwaltbar ist.

Abgesehen davon ist der Kommunikationsaufwand nicht sicher determinierbar, was für viele Kommunikationssysteme nicht zu bewältigen ist. Darüber hinaus wird dadurch Anspruch des CIPV-Systems an dessen Universalität vernichtet und die Hemmschwelle der Benutzung erhöht.

Im Folgenden wird das Format einer Austausch-CIPV beschrieben, die zum Austausch mit der Gegenstelle gemäß Tabelle 3 aufgebaut ist. Diese Form der CIPV ist vom Format her identisch mit der Basis-CIPV. Ebenso ist die Information und Bedeutung der ersten beiden Elemente zur Basis-CIPV identisch.

Allein der Matchcode birgt eine etwas andere Information: Er enthält die Summe der Matchcodes aller vorausgegangenen Versionen und der aktuellen Version. Dabei wird die Summe vorzugsweise modulo einer Basiszahl berechnet.

Im Folgenden wird der Austausch der CIPV bei der Initialisierung, der Vergleich der CIPV und die zugehörige Sicherheit beschrieben, insbesondere ist dabei wichtig, dass durch die Bildung der Summe aller Matchcodes der vergangene Entwicklungsprozess berücksichtigbar ist.

Hierzu beherbergt jeder der Teilnehmer für seine Schnittstelle intern eine CIPV-Historie, also beispielsweise eine Liste aller CIPV seiner vorhergehenden Entwicklungsstadien. In der CIPV-Historie sind alle Basis-CIPVs gespeichert, die während des Entwicklungsprozesses zur Veränderung der Schnittstelle geführt haben.

Beispiel:

{1000, 1000, 25037} Serienstart Version 1.000, vom 25.03.2007.
{1002, 1000, 12077} Version V1.002 vom 12.07.2007, kompatibel bis V1.000.
{1003, 1000, 27117} Version V1.003 vom 27.11.2007, kompatibel bis V1.000.
{1004, 1000, 19127} Version V1.004 vom 19.12.2007, kompatibel bis V1.000.
{1010, 1003, 47018} Version V1.010 vom 07.01.2008, kompatibel bis V1.003.

In der Tabelle 4 ist ein Beispiel aufgeführt, bei dem der Vergleich der Austausch-CIPV Vollkompatibilität ergibt. Nach dem Vergleich der Austausch-CIPVs stellen beide Teilnehmer fest, dass sie vollkompatibel zueinander sind.

In Tabelle 5 ist ein Beispiel aufgeführt, bei dem der Vergleich der Austausch-CIPV eingeschränkte Kompatibilität ergibt. Liegt der Teilnehmer T2 gegenüber Teilnehmer T1 um einen Schritt in der Entwicklung zurück, dann ergibt sich für die Historie der beiden Teilnehmer beispielhaft Tabelle 5.

Der Vergleich unter Berücksichtigung des Entwicklungsprozesses findet statt, indem die beiden Teilnehmer die untereinander ausgetauschte CIPV mit jeweils ihrer eigenen Historie nachvollziehen. Es entsteht eine vergleichbare CIPV.

Teilnehmer T1 berechnet die vergleichbare CIPV, indem er so viele Matchcodes seiner Historie solange aufsummiert, bis er auf die aktuelle Version des Teilnehmers T2 trifft, wobei die Aufsummation bei seiner ältesten CIPV begonnen wird und der zeitlichen Rangfolge folgt. Ein Beispiel hierzu ist in Tabelle 6 angegeben.

Dieser Fall entspricht dem oben geschilderten Fall 2, auch was das Verhalten der Teilnehmer und des Anwenders betrifft.

Nach einem Vergleich der vergleichbaren CIPVs stellt Teilnehmer 1 fest, dass er sich echt abwärtskompatibel (auch im Entwicklungsprozess) zu Teilnehmer 2 verhalten kann.

Teilnehmer T2 kann keine vergleichbare CIPV berechnen, weil ihm der Matchcode der aktuellen Version des Teilnehmer T1 {*1004, 1000,* 19127) fehlt. Den Entwicklungsprozess von T1 kann er also nicht nachvollziehen. Das muss er auch nicht; denn er glaubt, dass T1 abwärtskompatibel zu T2 ist. Die Gewissheit erhält er dadurch, dass T1 weiter mit ihm kommuniziert und in den Datenaustauschbetrieb übergeht, denn T1 konnte die Berechnung der vergleichbaren CIPV inklusive des Entwicklungsprozesses vollständig durchführen. Würde T1 feststellen, dass eine Abweichung im Entwicklungsprozess stattgefunden hat, stellt er den Kommunikationsbetrieb zu T2 ein, wie auch in dem unter Punkt 3 oder 4 oben beschriebenem Fall..).

Die Situation der Inkompatibilität kann in drei Fälle geteilt werden:

1. Die aktuelle Version des Teilnehmers T1 ist höher als die des Teilnehmers T2 und die Kompatibilitätsversion des Teilnehmers T1 ist höher als die aktuelle Version des Teilnehmers T2. Als Beispiel dienen folgende CIPVs (mit Matchcode-Summe in 16bit)

$$\text{CIPV T1} = \{1010, 1003, 64840\}, \text{CIPV T2} = \{1000, 1000, 25037\},$$

Dieser Fall ist direkt vergleichbar mit vorbeschriebenem Punkt 3. Entsprechend kann reagiert werden.

2. Der unplausible Fall, dass bei mindestens einem der Teilnehmer die Kompatibilitätsversion größer als die eigene aktuelle Version. Dieser Fall ist direkt vergleichbar mit oben beschriebenen Punkt 4a. Entsprechend kann reagiert werden.

3. Der scheinbar unplausible Fall, dass die aktuelle Version sowie die Kompatibilitätsversion beider Teilnehmer übereinstimmt, der Matchcode jedoch nicht, wird durchaus plausibel, wenn die Austausch-CIPV aus der CIPV-Historie berechnet wurde. Dieser Fall ist vergleichbar mit oben beschriebenem Punkt 4b. Entsprechend kann reagiert werden.

In Tabelle 7 ist ein Beispiel aufgeführt, bei dem der Vergleich der Austausch-CIPV Inkompatibilität ergibt.

Offensichtlich ist im Entwicklungsprozess beider Teilnehmer eine unterschiedliche Zwischenversion implementiert worden. Auch wenn beide Teilnehmer sich mit der Spezifikation der aktuellen Version 1004 einig sind, so kann es doch sein, dass Probleme auftreten, wenn Teile aus der Implementierung der einst aktuellen Version 1003 verwendet werden.

Dieser Fall kann mit dem Vergleich der aktuellen Basis-CIPVs {*1004, 1000, 19127*} nicht aufgedeckt werden, denn der Matchcode legt den Konflikt nicht offen, der Anwender wird über eventuelle Probleme nicht aufmerksam.

Erst der Vergleich einer Austausch-CIPV, die beidseitig aus der Historie gebildet wird, deckt auch diesen Fall auf.

**Der Entwicklungsprozess beider Teilnehmer ist durch die Einbeziehung der CIPV-Historie in die Austausch-CIPV vollständig abgeglichen. Im Ergebnis kann eine Kompatibilitätsgarantie gegeben werden.**

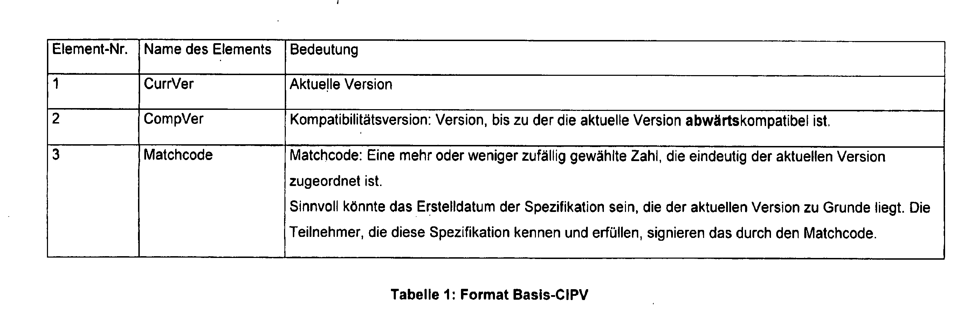

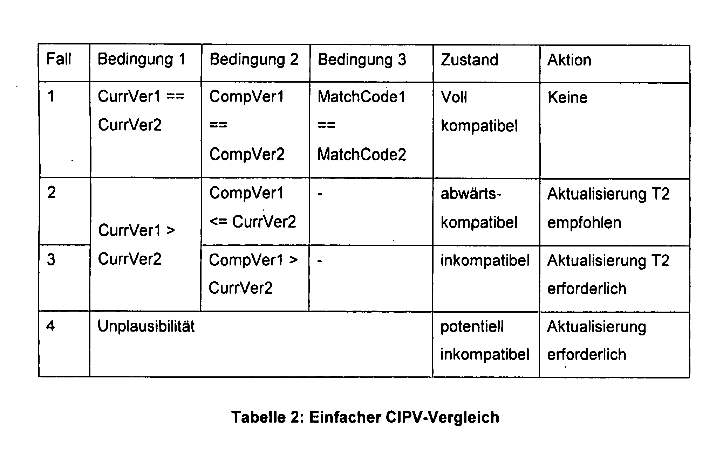

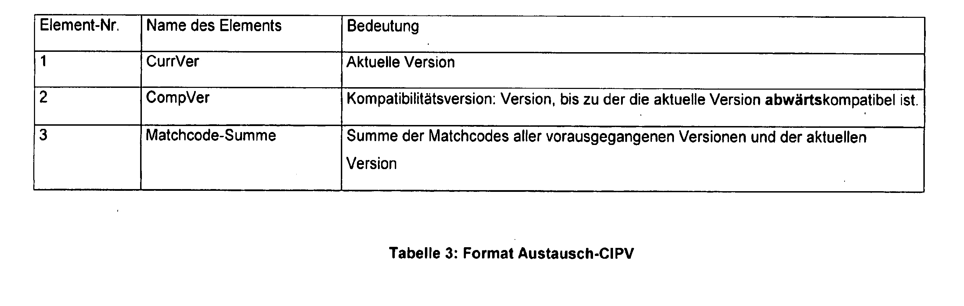

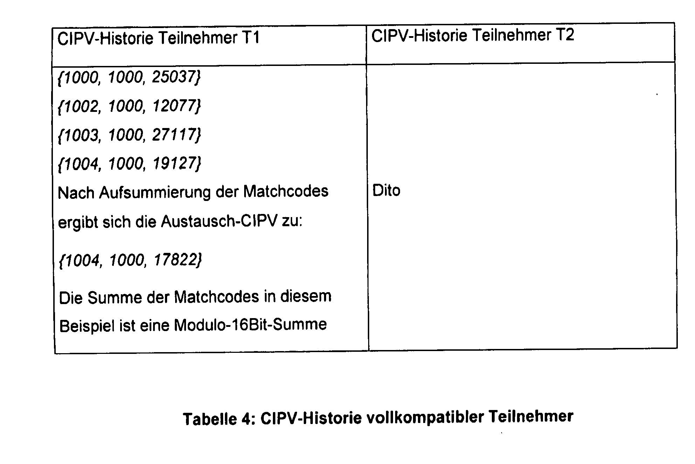

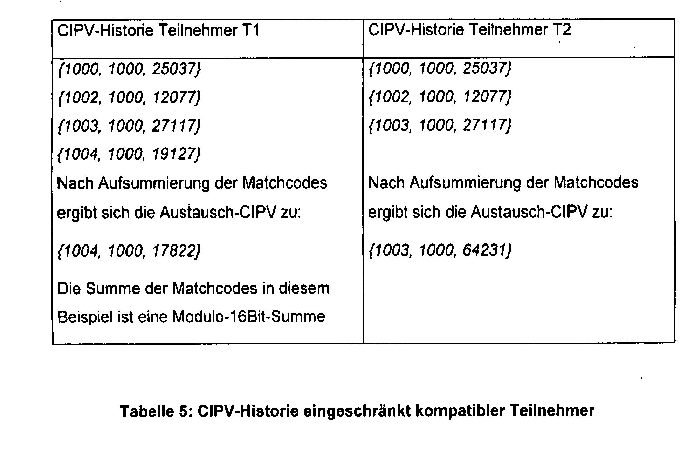

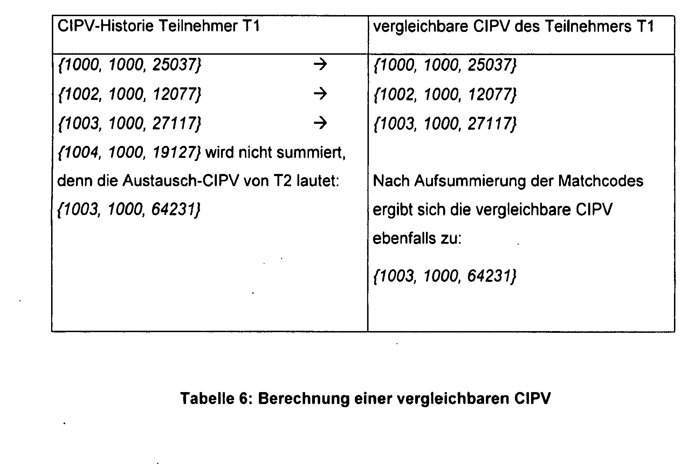

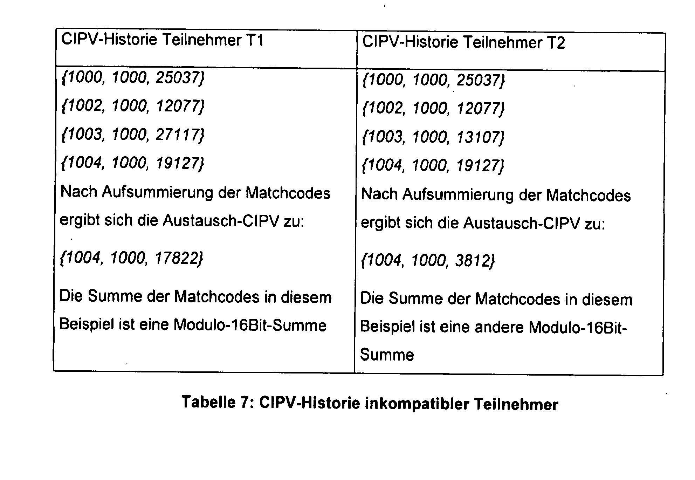

**Patentansprüche**

**1.** Verfahren zum Betreiben eines Systems, umfassend Teilnehmer, die über eine Schnittstelle Daten austauschen **gemäß einem Kommunikations-Protokoll oder einem Schnittstellen-Protokoll,**
**dadurch gekennzeichnet, dass**
jeder Teilnehmer eine Protokoll-Versions-Information oder eine Liste aller seinen vorangegangenen Entwicklungsstadien zugeordneten, vorangegangenen Protokoll-Versions-Informationen speichert,
wobei die oder eine neueste, Protokoll-Versions-Information 'CIPV' ausgetauscht und verglichen wird,
wobei **die Protokoll-Versions-Information zumindest**

- **eine Information über die aktuelle Version, also CurrVer,**
- **eine Information über die Kompatibilitätsversion, also CompVer, und**
- **eine Information über den Matchcode**

**umfasst,**
wobei **der Matchcode der aktuellen Version CurrVer seiner zugehörigen Protokoll-Versions-Information ein-**

eindeutig zugeordnet ist.

2. Verfahren nach mindestens einem der vorangegangenen Ansprüche,
**dadurch gekennzeichnet, dass**
*der Matchcode eine zufällig gewählte Zahl ist, die eindeutig der aktuellen Version zugeordnet ist, insbesondere das Erstelldatum der Spezifikation, die der aktuellen Version zu Grunde liegt, insbesondere wobei Teilnehmer, die die jeweilige. Spezifikation kennen und erfüllen, dies durch den Matchcode signieren, wobei die Kompatibilitätsversion diejenige Version ist, bis zu der die aktuelle Version abwärtskompatibel ist.*

3. Verfahren nach mindestens einem der vorangegangenen Ansprüche,
**dadurch gekennzeichnet, dass**
als Ergebnis des Vergleichs die volle Kompatibilität, die volle Inkompatibilität, Unplausibilität oder die Kompatibilität mit der jeweils neuesten oder einer älteren Version festgestellt wird,
insbesondere wobei das weitere Verhalten des anderen Teilnehmers beobachtet und mit ausgewertet wird.

4. Verfahren nach mindestens einem der vorangegangenen Ansprüche,
**dadurch gekennzeichnet, dass**
der Matchcode der ausgetauschten CIPV als Summe aller Matchcodes der in der Liste des jeweiligen Teilnehmers vorangegangenen CIPV gebildet ist, insbesondere modulo einer Basis, als Quersumme, als Prüfsumme oder als Fließkomma-Berechnung.

5. **Verfahren nach mindestens einem der vorangegangenen Ansprüche,**
**dadurch gekennzeichnet, dass**
sukzessive, insbesondere von der neuesten zur ältesten CIPV, mit den Listeneintragungen verglichen wird, insbesondere bis zumindest teilweise Kompatibilität festgestellt wird.

6. Verfahren nach mindestens einem der vorangegangenen Ansprüche,
**dadurch gekennzeichnet, dass**
**ein Teilnehmer so viele Matchcodes seiner Historie solange aufsummiert, bis der jeweils gebildete Summenwert dem Matchcode der aktuellen Version der ausgetauschten CIPV, also der vom anderen Teilnehmer empfangenen, gleicht und somit eine vergleichbare CIPV festgestellt ist, wobei die Aufsummation bei seiner ältesten CIPV begonnen wird und der zeitlichen Rangfolge folgt,**
**insbesondere wobei der nachfolgende Datenaustausch gemäß der aktuellen Version der ausgetauschten CIPV des zu dieser CIPV zugehörigen Teilnehmers erfolgt.**

7. Verfahren nach mindestens einem der vorangegangenen Ansprüche,
**dadurch gekennzeichnet, dass**
bei Nichtauffinden einer vergleichbaren CIPV der Teilnehmer das Kommunikationsverhalten des anderen Teilnehmers während des auf die Initialisierungsphase folgenden Datenaustausches beobachtet und dementsprechend Kompatibilität annimmt oder gegebenenfalls verneint.

8. Verfahren nach mindestens einem der vorangegangenen Ansprüche,
**dadurch gekennzeichnet, dass**
abhängig vom Ergebnis des Vergleichens Fehlermeldungen, Warnmeldungen oder dergleichen abgegeben werden oder der Datenaustausch ausgeführt wird.

9. System, umfassend Teilnehmer, **zur Durchführung eines Verfahrens nach einem der vorangegangenen Ansprüche** die über eine Schnittstelle zum Datenaustausch geeignet betreibbar sind,
**dadurch gekennzeichnet, dass**
jeder Teilnehmer einen Speicher zum Abspeichern einer Protokoll-Versions-Information aufweist,
wobei, insbesondere während der Initialisierungsphase, die Protokoll-Versions-Information austauschbar ist,
wobei jeder Teilnehmer Vergleichsmittel für das Vergleichen der Protokoll-Versions-Information, welche im zugehörigen Speicher abgelegt ist, und der empfangenen Protokoll-Versions-Information umfasst.

## Claims

1. Method for operating a system, comprising users which exchange data via an interface in accordance with a communication protocol or an interface protocol,
**characterised in that**
each user stores protocol version information or a list of all previous protocol version information associated with its previous development stages,
wherein the latest protocol version information, CIPV, is exchanged and compared,
wherein the protocol version information comprises at least

- information on the current version, i.e. CurrVer,
- information on the compatibility version, i.e. CompVer, and
- information on the match code,

wherein the match code of the current version CurrVer is uniquely assigned to its associated protocol version information.

2. Method according to at least one of the preceding claims,
**characterised in that**
the match code is a randomly selected number which is uniquely assigned to the current version, in particular the creation date of the specification on which the current version is based, in particular wherein users which know and comply with the respective specification, sign this using the match code,
wherein the compatibility version is that version up to which the current version is downwardly compatible.

3. Method according to at least one of the preceding claims,
**characterised in that**
as a result of the comparison, complete compatibility, complete incompatibility, implausibility or compatibility with the respectively latest or an earlier version is determined,
in particular wherein the further behaviour of the other user is observed and evaluated as well.

4. Method according to at least one of the preceding claims,
**characterised in that**
the match code of the exchanged CIPV is obtained as the sum of all match codes of the previous CIPV in the list of the respective user, in particular modulo one base, as a horizontal checksum, as a checksum or as a floating-point calculation.

5. Method according to at least one of the preceding claims,
**characterised in that**
the comparison with the list entries is carried out successively, in particular from the latest to the earliest CIPV, in particular until at least partial compatibility is found.

6. Method according to at least one of the preceding claims,
**characterised in that**
a user sums up as many match codes of its history as required until the respectively obtained sum value equals the match code of the current version of the exchanged CIPV, i.e. the one received from the other user, and thus a comparable CIPV is found, the summing-up starting with its earliest CIPV and proceeding in chronological order of priority,
in particular wherein the following data exchange takes place in accordance with the current version of the exchanged CIPV of the user associated with this CIPV.

7. Method according to at least one of the preceding claims,
**characterised in that**
if a comparable CIPV is not found, the user observes the communication behaviour of the other user during the data exchange following the initialisation phase and accordingly accepts compatibility or denies it, as the case may be.

8. Method according to at least one of the preceding claims,
**characterised in that**
error messages, warning messages or the like are issued or the data exchange is carried out, depending on the result of the comparison.

9. System, comprising users, for carrying out a method according to one of the preceding claims, which are operable in a manner suitable for data exchange via an interface,
**characterised in that**
each user has a memory for storing protocol version information,
wherein the protocol version information is exchangeable, in particular during the initialisation phase,
wherein each user comprises comparison means for comparing the protocol version information which is stored in the associated memory, and the received protocol version information.


**Revendications**

1. Procédé permettant de faire fonctionner un système, comprenant des abonnés qui échangent des données via une interface selon un protocole de communication ou un protocole d'interface,
   **caractérisé en ce**
   **que** chaque abonné mémorise une information de version de protocole ou une liste de toutes ses informations de version de protocole antérieures, associées à ses stades de développement antérieurs,
   ladite information de version de protocole 'CIPV' ou une plus récente étant échangée et comparée,
   l'information de version de protocole comprenant au moins

   - une information sur la version courante, soit CurrVer,
   - une information sur la version de compatibilité, soit CompVer, et
   - une information sur le matchcode,

   le matchcode de la version courante CurrVer étant associé de façon biunivoque à son information de version de protocole associée.

2. Procédé selon au moins une des revendications précédentes,
   **caractérisé en ce**
   **que** le matchcode est un nombre choisi au hasard qui est associé de façon univoque à la version courante, en particulier la date de création de la spécification qui est à la base de la version courante, les abonnés qui connaissent et satisfont à la spécification respective signant cela en particulier par le matchcode,
   la version de compatibilité étant la version jusqu'à laquelle la version courante est compatible vers le bas.

3. Procédé selon au moins une des revendications précédentes,
   **caractérisé en ce**
   **qu'**il est constaté comme résultat de la comparaison la compatibilité totale, l'incompatibilité totale, la non-plausibilité ou la compatibilité avec la plus récente ou une plus ancienne version,
   le comportement ultérieur de l'autre abonné étant en particulier observé et pris en compte dans l'évaluation.

4. Procédé selon au moins une des revendications précédentes,
   **caractérisé en ce**
   **que** le matchcode de la CIPV échangée est formé comme somme de tous les matchcodes des CIPV antérieures dans la liste de l'abonné respectif, en particulier modulo une base, sous la forme d'une somme des chiffres, d'une somme de contrôle ou d'un calcul en virgule flottante.

5. Procédé selon au moins une des revendications précédentes,
   **caractérisé en ce**
   **qu'**une comparaison successive, en particulier de la CIPV la plus récente à la plus ancienne, est effectuée avec les entrées de la liste, en particulier au moins jusqu'à compatibilité partielle.

6. Procédé selon au moins une des revendications précédentes,
   **caractérisé en ce**
   **qu'**un abonné somme les matchcodes de son historique jusqu'à ce que la valeur de somme formée soit égale au matchcode de la version courante de la CIPV échangée, donc à celui reçu de l'autre abonné, et par conséquent qu'une CIPV comparable soit constatée, la sommation commençant à sa CIPV la plus ancienne et suivant l'ordre chronologique,
   l'échange de données suivant ayant lieu en particulier selon la version courante de la CIPV échangée de l'abonné associé à cette CIPV.

**7.** Procédé selon au moins une des revendications précédentes,
**caractérisé en ce**
**que** si aucune CIPV comparable n'est trouvée, l'abonné observe le comportement de communication de l'autre abonné pendant l'échange de données qui suit la phase d'initialisation et, en fonction de celui-ci, accepte ou refuse le cas échéant la compatibilité.

**8.** Procédé selon au moins une des revendications précédentes,
**caractérisé en ce**
**qu'**en fonction du résultat de la comparaison, des messages d'erreur, des avertissements ou analogues sont émis ou l'échange de données est effectué.

**9.** Système, comprenant des abonnés, permettant de réaliser un procédé selon une des revendications précédentes, que l'on peut faire fonctionner pour échanger des données de manière compatible via une interface,
**caractérisé en ce**
**que** chaque abonné présente une mémoire pour mémoriser une information de version de protocole, l'information de version de protocole étant échangeable, en particulier pendant la phase d'initialisation, chaque abonné comprenant des moyens de comparaison pour comparer l'information de version de protocole qui est stockée dans la mémoire associée avec l'information de version de protocole reçue.

| Element-Nr. | Name des Elements | Bedeutung |
|---|---|---|
| 1 | CurrVer | Aktuelle Version |
| 2 | CompVer | Kompatibilitätsversion: Version, bis zu der die aktuelle Version **abwärts**kompatibel ist. |
| 3 | Matchcode | Matchcode: Eine mehr oder weniger zufällig gewählte Zahl, die eindeutig der aktuellen Version zugeordnet ist.<br><br>Sinnvoll könnte das Erstelldatum der Spezifikation sein, die der aktuellen Version zu Grunde liegt. Die Teilnehmer, die diese Spezifikation kennen und erfüllen, signieren das durch den Matchcode. |

**Tabelle 1: Format Basis-CIPV**

| Fall | Bedingung 1 | Bedingung 2 | Bedingung 3 | Zustand | Aktion |
|---|---|---|---|---|---|
| 1 | CurrVer1 == CurrVer2 | CompVer1 == CompVer2 | MatchCode1 == MatchCode2 | Voll kompatibel | Keine |
| 2 | CurrVer1 > CurrVer2 | CompVer1 <= CurrVer2 | - | abwärts-kompatibel | Aktualisierung T2 empfohlen |
| 3 | | CompVer1 > CurrVer2 | - | inkompatibel | Aktualisierung T2 erforderlich |
| 4 | Unplausibilität | | | potentiell inkompatibel | Aktualisierung erforderlich |

**Tabelle 2: Einfacher CIPV-Vergleich**

| Element-Nr. | Name des Elements | Bedeutung |
|---|---|---|
| 1 | CurrVer | Aktuelle Version |
| 2 | CompVer | Kompatibilitätsversion: Version, bis zu der die aktuelle Version **abwärts**kompatibel ist. |
| 3 | Matchcode-Summe | Summe der Matchcodes aller vorausgegangenen Versionen und der aktuellen Version |

**Tabelle 3: Format Austausch-CIPV**

| CIPV-Historie Teilnehmer T1 | CIPV-Historie Teilnehmer T2 |
|---|---|
| *{1000, 1000, 25037}* | |
| *{1002, 1000, 12077}* | |
| *{1003, 1000, 27117}* | |
| *{1004, 1000, 19127}* | |
| Nach Aufsummierung der Matchcodes ergibt sich die Austausch-CIPV zu: | Dito |
| *{1004, 1000, 17822}* | |
| Die Summe der Matchcodes in diesem Beispiel ist eine Modulo-16Bit-Summe | |

**Tabelle 4: CIPV-Historie vollkompatibler Teilnehmer**

EP 2 283 630 B1

| CIPV-Historie Teilnehmer T1 | CIPV-Historie Teilnehmer T2 |
|---|---|
| *{1000, 1000, 25037}* | *{1000, 1000, 25037}* |
| *{1002, 1000, 12077}* | *{1002, 1000, 12077}* |
| *{1003, 1000, 27117}* | *{1003, 1000, 27117}* |
| *{1004, 1000, 19127}* | |
| Nach Aufsummierung der Matchcodes ergibt sich die Austausch-CIPV zu: | Nach Aufsummierung der Matchcodes ergibt sich die Austausch-CIPV zu: |
| *{1004, 1000, 17822}* | *{1003, 1000, 64231}* |
| Die Summe der Matchcodes in diesem Beispiel ist eine Modulo-16Bit-Summe | |

**Tabelle 5: CIPV-Historie eingeschränkt kompatibler Teilnehmer**

EP 2 283 630 B1

| CIPV-Historie Teilnehmer T1 | vergleichbare CIPV des Teilnehmers T1 |
|---|---|
| *{1000, 1000, 25037}* → | *{1000, 1000, 25037}* |
| *{1002, 1000, 12077}* → | *{1002, 1000, 12077}* |
| *{1003, 1000, 27117}* → | *{1003, 1000, 27117}* |
| *{1004, 1000, 19127}* wird nicht summiert, denn die Austausch-CIPV von T2 lautet: *{1003, 1000, 64231}* | Nach Aufsummierung der Matchcodes ergibt sich die vergleichbare CIPV ebenfalls zu: *{1003, 1000, 64231}* |

**Tabelle 6: Berechnung einer vergleichbaren CIPV**

| CIPV-Historie Teilnehmer T1 | CIPV-Historie Teilnehmer T2 |
|---|---|
| *{1000, 1000, 25037}* | *{1000, 1000, 25037}* |
| *{1002, 1000, 12077}* | *{1002, 1000, 12077}* |
| *{1003, 1000, 27117}* | *{1003, 1000, 13107}* |
| *{1004, 1000, 19127}* | *{1004, 1000, 19127}* |
| Nach Aufsummierung der Matchcodes ergibt sich die Austausch-CIPV zu: | Nach Aufsummierung der Matchcodes ergibt sich die Austausch-CIPV zu: |
| *{1004, 1000, 17822}* | *{1004, 1000, 3812}* |
| Die Summe der Matchcodes in diesem Beispiel ist eine Modulo-16Bit-Summe | Die Summe der Matchcodes in diesem Beispiel ist eine andere Modulo-16Bit-Summe |

**Tabelle 7: CIPV-Historie inkompatibler Teilnehmer**

EP 2 283 630 B1